# EUROPEAN PATENT APPLICATION

(11) **EP 1 514 730 A2**
(43) Date of publication of application: **16.03.2005**
(21) Application number: 04021426.4
(22) Date of filing: 09.09.2004
(51) Int. Cl.: B60Q 1/14, B60Q 1/076

(54) **Automatic re-aim of headlights to improve beam patterns**

(30) Priority: 10.09.2003 US 501703 P
(71) Applicant: Decoma International Inc., Concord, Ontario L4K 4J5 (CA)
(72) Inventor: Fleming, Breton J., Kingston Ontario K7M 1B5 (CA); Valcamp, David J., Frankford Ontario K0K 2C0 (CA); Hadley, Michael H., Frankford Ontario K0K 2C0 (CA)
(74) Representative: Hössle Kudlek & Partner

(57) **Abstract**

A novel headlight system (20) which vertically re-aims at least a low beam illuminator (28) to meet regulatory requirements, depending upon the mode of operation of the headlight system (20), while providing efficient and effective illumination.

## Description

### FIELD OF THE INVENTION

The present invention relates to headlight systems for automotive vehicles and the like. More specifically, the present invention relates to headlight systems which re-aim the headlights to achieve desired operating conditions such as beam patterns, when the headlight systems are used in different modes of operation.

### BACKGROUND OF THE INVENTION

Lighting systems for automotive vehicles have undergone significant changes in the last decade. Improved lamp technologies, design techniques and stricter regulatory requirements have resulted in brighter, better-focused lighting systems that provide better illumination for vehicle drivers, enhancing safety and driver comfort, while also reducing the glare and other undesired artifacts the headlight system may have on the drivers of other vehicles.

Modern headlight systems often use multiple lamps and/or much brighter lamps, such as Halogen and/or High Intensity Discharge (HID) lamps, to provide an increased intensity of light for night driving. Also, in addition to conventional reflector headlights, wherein the light source is placed at the focal point of a parabolic reflector, projector headlights have been created. In a projector headlight, the light source is placed at the focal point of an elliptical reflector, which is more efficient at collecting useful light from the light source than a parabolic reflector, and one or more focusing lenses are employed in the light path downstream of the reflector to appropriately focus the light into the desired pattern. In any case, the increased amount of light provided by modern headlight systems offers a safer night time driving experience compared to headlight systems in use even just a few years ago.

However, along with the advantages of the increased intensity of light provided by such modern headlight systems, the possible detrimental effects of such intense light on other drivers, in vehicles approaching a vehicle equipped with a modern headlight system or in vehicles being overtaken by a vehicle equipped with a modern headlight system, are greatly increased and could result in oncoming driver discomfort, at best or even unsafe driving conditions, at worst.

Accordingly, various regulatory bodies specify both the maximum amount of light which can be produced by a headlight system and the beam patterns in which the light can be emitted by the headlight system. For example, the ECE, FMVSS, JIS and other regulatory bodies have various regulations which specify the beam pattern (both intensity and distribution) of the light produced by a headlight system when running in low beam (passing beam) mode and a different beam pattern of the headlight system when running in high beam mode (driving beam).

Manufacturing an effective headlight system which produces good illumination and still meets the standards and limitations set by regulatory bodies is a challenge. When combined with the requirements of vehicle design aesthetics and cost considerations, the difficulties are further increased.

It is desired to have a headlight system which provides good illumination while meeting relevant regulatory limitations in a reasonable manner.

### SUMMARY OF THE INVENTION

It is an object of the present invention to provide a novel headlight system which obviates or mitigates at least one disadvantage of the prior art.

According to a first aspect of the present invention, there is provided a headlight system, each side of the headlight system comprising: a low beam illuminator being horizontally and vertically aimable; a high beam illuminator; an actuator operable to alter the vertical aim of the low beam illuminator; and the system including a control means operating the actuator for each side to aim the low beam illuminator at a first vertical aim target position when the headlight system is operating in low beam mode and operating to aim the low beam illuminator at a second vertical aim target position when the headlight system is operating in high beam mode wherein both the high beam and low beam illuminators are operating.

Preferably, the actuators are part of a headlight leveling system which operates to aim the low beam illuminator at a vertical aim target position.

The present invention provides a headlight system which can be adapted to comply with a variety of different headlight regulatory regimes while providing effective illumination. According to another aspect of the invention, there is provided a headlight system a low beam illuminator and a high beam illuminator. An actuator is operable to alter aiming of the hot spot of the low beam. A controller effects the actuator to move the low beam illuminator aiming the low beam hot spot between a first target when the headlight system is operating in a low beam mode wherein only said low beam illuminator is energized, and a second target when the headlight system is operating in a high beam mode wherein both the high beam and low beam illuminators are energized.

### BRIEF DESCRIPTION OF THE DRAWINGS

Preferred embodiments of the present invention will now be described, by way of example only, with reference to the attached Figures, wherein:
- Figure 1: shows a schematic representation of one side of a four-bulb-burn headlight system with an actuator and a controller to adjust the vertical aim of a low beam illuminator to a vertical aim target position;
- Figure 2: shows a low beam pattern permitted by one regulatory body;
- Figure 3a: shows the low beam pattern produced by the low beam illuminator of Figure 1;
- Figure 3b: shows the high beam pattern produced by the high beam illuminator of Figure 1;
- Figure 4: shows the high beam pattern of Figure 3b combined with the low beam pattern of Figure 3a without the benefit of the present invention; and
- Figure 5: shows the combined high beam pattern and low beam pattern produced with the benefit of the present invention.

### DETAILED DESCRIPTION OF THE INVENTION

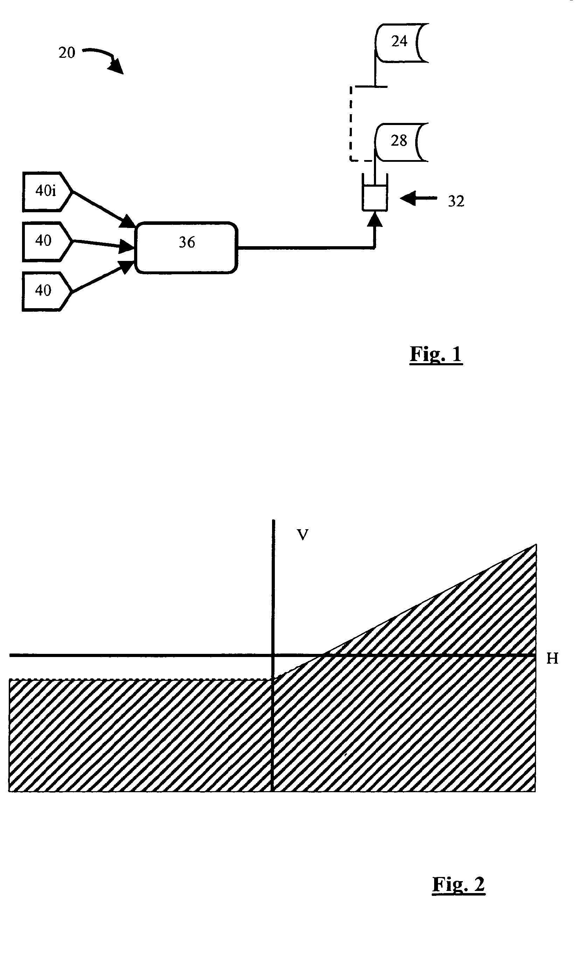

One side (driver or passenger side) of a modern headlight system 20 is schematically in Figure 1. Each side of system 20 includes a high beam illuminator 24 and a low beam illuminator 28. Each illuminator 24 and 28 can comprise an assembly of a reflector and/or one or more lenses and a light source, such as an incandescent, HID or Halogen bulb. System 20 is a four-bulb-burn headlight system, wherein each high beam illuminator 24 is only powered (and thus illuminating) when system 20 is in high beam mode but each low beam illuminator 28 is powered when system 20 is operating in both low beam and high beam modes. In other words, both of illuminators 24 and illuminators 28 are operating when system 20 is in high beam mode while only the low beam illuminators 28 are operating when system 20 is in low beam mode. This is in contrast to two-bulb-burn headlight systems wherein only the appropriate one of high beam illuminators 24 and low beam illuminators 28 are powered in either respective mode.

Each side of system 20 includes an actuator 32 which is operable to alter the vertical aim of low beam illuminator 28 in response to signals from a controller 36. Actuators 32 can be a linear DC stepping motor or any other suitable electrical or mechanical means for vertically altering the aim of a low beam illuminator 28, as will occur to those of skill in the art. Typically, actuator 32 mechanically tilts the housing of a low beam illuminator 28 to alter its aim, although other techniques such as moving the reflector or lens of a low beam illuminator 28 can also be employed, as will be apparent to those of skill in the art.

As indicated by the dashed lines in Figure 1, depending upon the mounting configuration of illuminators 24 and 28 on a vehicle, the actuator 32 on each side may vertically alter the aim of just low beam illuminator 28 or of both low beam illuminators 28 and high beam illuminators 24.

System 20 includes a controller 36, which can be a digital controller such as a microprocessor, microcontroller, PIC, or other suitable digital or analog processing device as will occur to those of skill in the art, receives inputs from one or more sensors 40 which can indicate any changes in the positioning of the vehicle body with respect to the road surface due to static (cargo and/or passengers) and/or dynamic (acceleration/deceleration and/or cornering) loads, and controller 36 generates appropriate control signals for actuators 32 to alter the vertical aim of low beam illuminators 28, as required. In Figure 1, the dashed signal line from controller 36 would connect to the actuator 32 of the other side (not shown) of system 20. An example of a known headlight leveling system is discussed in U.S. Patent 6,183,118 to Toda et al.

Under ECE regulations, for example, if a low beam illuminator 28 has an HID light source, means to adjust the vertical aim of the low beam illuminator 28 must be provided. At a minimum, these means can comprise a manual adjustor to allow a driver to manually adjust the vertical aim of the low beam illuminators to compensate for static loading of the vehicle. However, it is increasingly common that an automatic system is provided as a safety enhancement, even in countries/regions where the ECE regulation, or similar regulations, do not apply, and thus headlight leveling systems similar to that shown in Figure 1 are becoming increasingly common. Such automatic systems include a predefined vertical aim target position at which the system operates to maintain the illuminator aimed.

In a present embodiment of the instant invention, low beam illuminators 28a, 28b comprise projector headlight assemblies, each with an HID light source. High beam illuminators 24a, 24b comprise projector headlight assemblies with a Halogen light source. This configuration is a high performance headlight system in that it is intended to produce illumination approaching or meeting the maximum illumination (intensity and distribution) permitted by the appropriate regulatory bodies.

In this particular embodiment, the reflectors for the left two projector assemblies share a common frame as do the reflectors for the right two projector assemblies. Thus, when actuators 32a, 32b alter the vertical aim of the respective low beam illuminators 28a, 28b, the vertical aim of the corresponding high beam illuminators 24a, 24b are also altered. As will be apparent to those of skill in the art, such a configuration is not required by the present invention and high beam illuminators 24a, 24b can have a fixed vertical position while low beam illuminators 28a, 28b are re-aimable by actuators 32a, 32b. Similarly, there are no requirement that either high beam illuminators 24a, 24b nor low beam illuminators 28a, 28b be projector assemblies.

As mentioned above, various regulatory bodies impose regulations on the intensity and distribution (beam pattern) of headlight systems. Figure 2 shows an ECE mandated beam pattern for low beam headlights. In the Figure, the illustrated axes are the horizontal (H) axis and the vertical (V) axis which are centered about the center of the illuminator and the shaded portion of the Figure indicates generally where the largest amount of illumination from the low beam illuminator is located. The actual configuration and testing of beam patterns is well known to those of skill in the art and need not be discussed further herein.

As can be seen, to prevent blinding oncoming traffic, the permitted beam pattern generally only allows light to be projected somewhat (about 0.6 degrees) below the H axis in the left hand region of the beam and allows for light to be projected above the H axis on the right hand region of the beam at a height above the H axis that increases generally linearly with the distance from the V axis. As will be apparent to those of skill in the art, this pattern will be reversed in jurisdictions in which vehicles travel on the left-hand side of the road. In either case, the pattern is intended to mitigate the creation of glare for oncoming drivers while providing illumination of the side of the road and/or sidewalks, etc.

One technique often employed to make the beam pattern of an illuminator comply with a permitted pattern is to include a metal shield in the internal light path of the illuminator to block light from the prohibited regions of the beam pattern and such a technique is employed with low beam illuminator 28 of system 20.

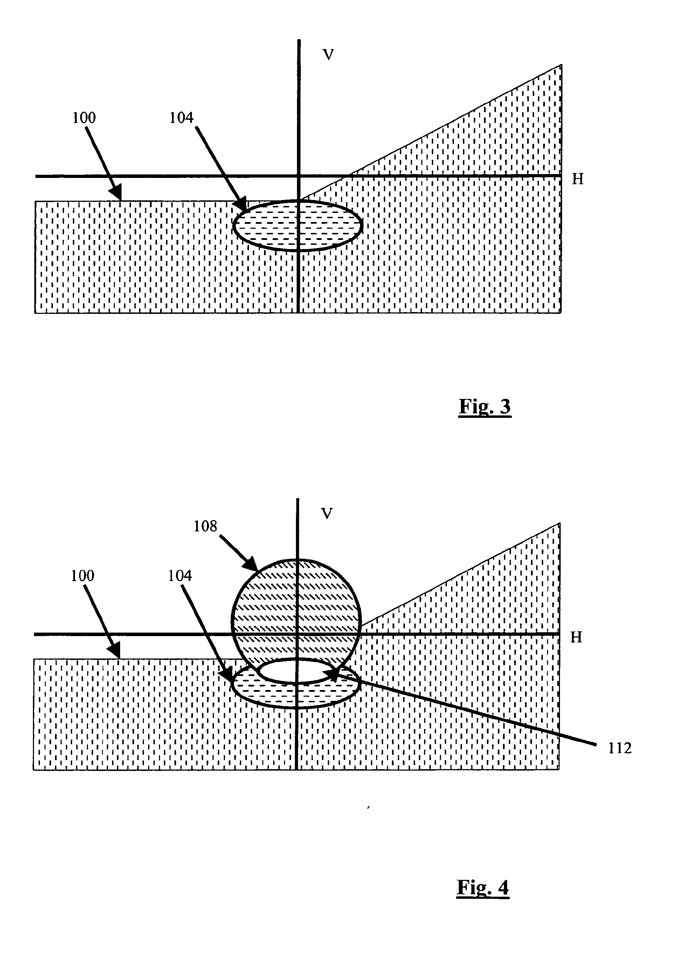

Figure 3a shows, at the shaded region 100, the actual beam pattern achieved, including region 104 of maximum intensity of the beam pattern. Figure 3b shows, at shaded region 106, the beam pattern which high beam illuminator 24 produces, including region 108 of maximum intensity of the pattern.

High beam illuminator 24 produces a beam pattern 106 which is generally an elliptical in shape with an approximately circular region 108 of high-intensity centered at the intersection of the H and V axes as shown in Figure 3b.

As system 20 is a four-bulb-burn system, when headlight system 20 is operating in high beam mode the beam patterns of low beam illuminator 28 and high beam illuminator 24 are combined and Figure 4 shows a combined low beam pattern 100 and the high beam pattern 106 which would be achieved without the present invention.

However, section 6.3 of ECE regulation #112 requires that the light intensity measured at the intersection of the H and V axes of the high beam pattern be at least 80% as intense as the maximum intensity found anywhere else in the beam pattern. As can be seen, low beam maximum intensity area or hot spot 104 and high beam maximum intensity area or hot spot 108 overlap in region 112 which, in a system 20 not employing the present invention, is not located at the intersection of the H and V axes and which is sufficiently bright, due to the overlap, that the 80% regulation is not met by this pattern.

Conventional techniques for addressing such an overly bright area include intentionally mis-focusing one or both of the low and high beam illuminators and/or employing a metal shield in the high beam illuminator 24 to make it not illuminate the area beneath the H axis. However, both of these techniques will result in a headlight system which performs less than optimally.

The dilemma the present inventors faced was that, if region 112 was the brightest region, it should be moved to the intersection of the H and V axes. However, moving the vertical aim of low beam illuminator 28 upwards would, in low beam mode, violate the low beam pattern required by regulation as the illumination would impermissibly approach or cross above the H axis. Alternatively, moving the vertical aim of the high beam illuminator 24 upwards (to avoid the creation of overlap region 108) or relocating the maximum intensity region of the low beam illuminator 28 downwards, but would result in a much lower performance of the headlight system. Also, relocating the vertical aim of low beam illuminator 28 when in low beam mode, whether upwards or downwards, results in a violation of the ECE regulatory requirements and thus is not permitted.

The present inventors determined that if the vertical aim target position for low beam illuminator 28 was moved when headlight system 20 is in high beam mode, then the low beam illuminator 28 would be vertically re-aimed and the desired performance could be obtained and the regulatory requirements for the low beam pattern could still be met.

According, sensor 40i connected to controller 36 determines whether headlight system 20 is in high beam mode or low beam mode. Sensor 40i can comprise an additional signal lead from the high beam/low beam selection system or any other means suitable for determining the operating mode of headlight system 20 as will occur to those of skill in the art. Controller 36 accepts the signal from sensor 40i and, depending upon the indicated mode of headlight system 24, selects one of two vertical aim target positions for low beam illuminator 28.

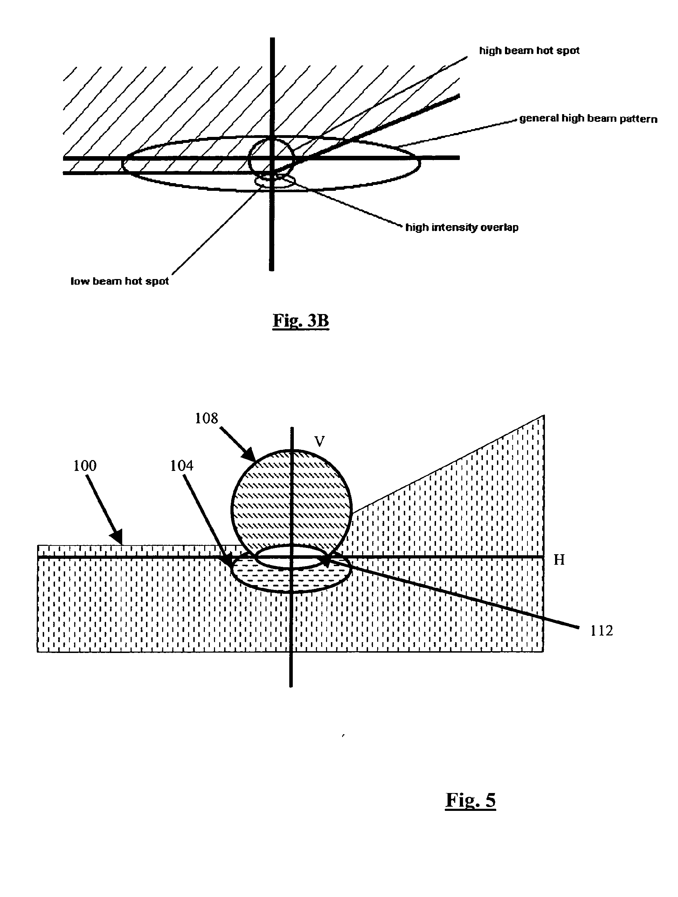

In low beam mode, controller 36 operates actuator 32 to vertically aim low beam illuminator 28 at the vertical aim target position which is at a height required to achieve the low beam pattern illustrated in Figure 3a. In high beam mode, controller 36 operates actuator 32 to vertically aim low beam illuminator 28 at the higher vertical aim target position which is at a height required to achieve the high beam pattern illustrated in Figure 5, wherein the maximum intensity region 112 resulting from the overlap of the maximum intensity region 104 of low beam pattern 100 and the maximum intensity region 108 of high beam pattern 106 is approximately centered at the intersection of the H and V axis as desired, and the performance of headlight system 20 in high beam mode is enhanced, rather than degraded.

In a present embodiment, the vertical aim target position for low beam illuminator 28 in high beam mode is about 0.9 degrees higher than the vertical aim target position in low beam mode. As will be apparent to those of skill in the art, the vertical aim target positions for other embodiments of headlight system 20 will vary, depending upon the applicable regulatory requirements, the actual construction of high beam illuminator 24 and low beam illuminator 28, the metal shields employed in the illuminator(s), if any, and other parameters. However, as will be readily apparent, the vertical aim target positions for other embodiments can easily be determined empirically, as needed.

The present invention is not limited to headlight systems with two modes of operation. For example, it is contemplated that a headlight system further including fog lamps, and thus having three modes of operation (high beam, low beam and fog) can also employ the present invention. When providing night time driving illumination in fog, it is desired to avoid distributing light in the region close to horizontal to the driver's sight lines as reflections from the water particles in the fog can create significant glare for the driver of the vehicle. Accordingly, many vehicles provide fog lamps which are mounted below the headlight system of the vehicle in an attempt to provide sufficient illumination with a reduced risk of reflected glare impeding the vehicle driver's vision. It is contemplated by the present inventors that system 20 can be constructed such that sensor 40i will also indicate to controller 36 when system 20 is in fog lamp mode in addition to indicating low beam and high beam modes. Upon detecting that system 20 is in fog lamp mode, controller 36 will then employ a vertical aim target position which is lower than the vertical aim target position for low beam mode, if permitted by the relevant regulatory bodies. Controller 36 will then operate actuator 32 to alter the vertical aim of low beam illuminator 28 downwards from the normal low beam pattern vertical aim target position to further mitigate the possibility of reflected glare.

It is also contemplated that the present invention can be employed with a headlight system wherein combined fog and driving lights which are vertically aimable by additional actuators 32 are provided. In driving mode, the vertical aim target position for the combined fog and driving lights will be higher than the vertical aim target position when the lighting system is in fog mode. It is also contemplated that the present invention can be employed in headlight systems wherein the low beam illuminator 28 on each side and the high beam illuminator 24 on each side are connected to different separate actuators 32 and controller 36 operates to aim each of the low beam illuminators 28 and high beam illuminators 24 at different vertical aim target positions. Those of skill in the art will be able to think of other possible modes with other vertical aim points which will be useful in various circumstances and such modes and vertical aim target aim positions are within the scope of the present invention.

It is also contemplated that the present invention can be employed to address the issues of different standards imposed by regulatory bodies, thus simplifying the configuration issues faced by manufacturers of headlight systems. Specifically, controller 36 can be programmed with vertical aim target positions which are customized for, and meet, particular regulatory regimes. Such programming can be performed when a manufacturer determines the regulations that an installed headlight system must meet, or can be programmed when the automobile in which the headlight system is installed is sold. Alternatively, controller 36 can be preprogrammed with sets of vertical aim target positions for each of multiple regulatory regimes and the appropriate set of vertical aim target positions can be selected as needed.

The above-described embodiments of the invention are intended to be examples of the present invention and alterations and modifications may be effected thereto, by those of skill in the art, without departing from the scope of the invention which is defined solely by the claims appended hereto.

## Claims

1. A headlight system, each side of the headlight system comprising:
a low beam illuminator being horizontally and vertically aimable;
a high beam illuminator;
an actuator operable to alter the vertical aim of the low beam illuminator; and
the system including a control means operating the actuator for each side to aim the low beam illuminator at a first vertical aim target position when the headlight system is operating in low beam mode and operating to aim the low beam illuminator at a second vertical aim target position when the headlight system is operating in high beam mode wherein both the high beam and low beam illuminators are operating.

2. The headlight system of claim 1 further comprising a third mode of operation with a corresponding third target, the controller operating the actuator to aim the low beam illuminator at the third vertical aim target position when the controller determines that the headlight system is in the third mode of operation.

3. The headlight system of anyone of claims 1 to 2, wherein the controller is programmed with at least two sets of first and second vertical aim target positions, each set corresponding to the requirements of a particular regulatory regime and the controller providing means to select a desired set from the at least two sets.

4. The headlight system of anyone of claims 1 to 3, wherein each side of the system includes a further illuminator and a further actuator and the controller includes a pair of vertical aim target positions for the further illuminators, the controller operating the further actuators to aim the further illuminators at one of the vertical aim target positions when the system is operating in a first mode and to aim the further illuminators at the other of the vertical aim target positions when the system is operating in a second mode.

5. The headlight system of anyone of claims 1 to 4, wherein the low beam illuminator includes a parabolic reflector.

6. The headlight system of anyone of claims 1 to 5, wherein the low beam illuminator is a projector assembly.

7. A headlight system comprising:
a low beam illuminator having a low beam hot spot;
a high beam illuminator having a high beam hot spot;
an actuator operable to alter aiming of the low beam hot spot; and
a controller operating the actuator to move the low beam illuminator aiming the low beam hot spot at a first target when the headlight system is operating in a low beam mode wherein only said low beam illuminator is energized and operating to move the low beam illuminator aiming the low beam hot spot at a second target when the headlight system is operating in a high beam mode wherein both the high beam and low beam illuminators are energized.

8. The headlight system of claim 7, wherein said high beam hot spot is aimed at the second target when said system is operating in the high beam mode.
